# EUROPÄISCHE PATENTSCHRIFT

(11) **EP 1 300 317 B1**
(45) Veröffentlichungstag und Bekanntmachung des Hinweises auf die Patenterteilung: **18.01.2006**
(21) Anmeldenummer: 02022262.6
(22) Anmeldetag: 04.10.2002
(51) Int. Cl.: B62D 1/04, B60R 21/20

(54) **Fahrzeuglenkrad**
Steering wheel
Volant de direction

(30) Priorität: 05.10.2001 DE 20116306 U
(43) Veröffentlichungstag der Anmeldung: 09.04.2003
(73) Patentinhaber: TRW Automotive Safety Systems GmbH, 63743 Aschaffenburg (DE)
(72) Erfinder: Schütz, Dominik, 63857 Waldaschaff (DE)
(74) Vertreter: Sties, Jochen

(56) Entgegenhaltungen:
- DE-U- 20 103 890

## Beschreibung

Die Erfindung betrifft ein Fahrzeuglenkrad mit einer Nabe und mehreren in ein gemeinsames Gehäuse integrierten Schaltern und einem Gassackmodul mit einer Abdeckung.

Die Schalter ermöglichen es dem Fahrer eines Kraftfahrzeugs, beispielsweise die Gangschaltung, das Radio oder ein Telefon zu betätigen, ohne die Hände vom Lenkrad nehmen zu müssen. Bisher wurde in der Regel für jede zu schaltende Funktion ein separater Schalter vorgesehen, der an der Nabe angebracht wurde. Hieraus resultiert ein hoher Montageaufwand. Weiterhin muß mit hohem Aufwand sichergestellt sein, daß die Schalter sehr präzise angeordnet sind, da sich andernfalls ein unerwünschter Spalt zu benachbarten Bauteilen ergeben kann, beispielsweise zum danebenliegenden Schalter oder zu einer Abdeckung des Lenkrades.

Aus der DE 201 03 890 U1 ist ein Lenkrad der eingangs genannten Art mit einem Gassackmodul und einer Multifunktionsschaltereinheit bekannt. Das Gassackmodul und die Multifunktionsschaltereinheit bilden eine vormontierte Einheit, die an einer Umschäumung des Lenkrads befestigt ist. Die Multifunktionsschaltereinheit wird durch Führungsstifte, die Vorsprünge des Gehäuses der Multifunktionsschaltereinheit durchdringen und in Vorsprünge der Abdeckung des Gassackmoduls eingepreßt sind, am Gassackmodul festgehalten. An den Führungsstiften sind Lagerbuchsen vorgesehen, die zur Befestigung der vormontierten Einheit in die Umschäumung eingepreßt werden.

Die Aufgabe der Erfindung besteht somit darin, bei einem Lenkrad der eingangs genannten Art eine einfache, aber genaue Lagerung und Positionierung der Schalter am Lenkrad zu ermöglichen.

Zu diesem Zweck ist bei einem Fahrzeuglenkrad der eingangs genannten Art erfindungsgemäß vorgesehen, daß das Gehäuse an der Nabe befestigt ist und am Gehäuse mindestens ein Lager angebracht ist, mit dem die Abdeckung zusammenwirkt. Auf diese Weise muß nur ein einziges Gehäuse für die mehreren Schalter hergestellt und dann am Lenkrad montiert werden. Dies führt zu Kosteneinsparungen. Außerdem sind auf diese Weise die verschiedenen Schalter untereinander präzise angeordnet, so daß zwischen den einzelnen Schaltern kein unerwünschter Spalt entstehen kann. Das Zusammenwirken des am Gehäuse angebrachten Lagers mit der Abdeckung ergibt eine besonders präzise Positionierung der Abdeckung für das Gassackmodul relativ zu den Schaltern, so daß auch zwischen den einzelnen Schaltern und der Abdeckung kein unerwünschter Spalt entstehen kann.

Vorzugsweise ist das Lager durch einen Lagerzapfen gebildet, der in eine Öffnung der Abdeckung eingreift, so daß die Abdeckung unmittelbar am Gehäuse angebracht ist. Auf diese Weise ist die Abdeckung aber dennoch relativ zu den Schaltern, die feststehend am Lenkrad angebracht sind, beweglich, so daß sie beispielsweise zur Betätigung eines Hupenschalters gedrückt werden kann.

Vorzugsweise ist vorgesehen, daß das Gehäuse das Gassackmodul mindestens teilweise umgibt. Die Schalter können somit in vorteilhafter Weise in den Bereichen um das Gassackmodul herum angeordnet werden, die zwischen dem Lenkradkranz und dem Gassackmodul zur Verfügung stehen, so daß sich eine besonders kompakte Gestaltung ergibt.

Vorzugsweise wird ein gemeinsamer Stecker zum Anschließen der Schalter verwendet. Dieser Stecker kann an einer geeigneten Stelle entweder unmittelbar am Gehäuse oder am Ende eines Kabels angebracht sein, das in das Gehäuse hineingeführt wird. Durch Einstecken dieses einzigen Steckers in einen komplementären Gegenstecker können alle Schalter mit geringem Aufwand angeschlossen werden.

Vorzugsweise ist vorgesehen, daß die Funktion mindestens einer der Schalter frei programmierbar ist. Dies ermöglicht, ein standardisiertes Gehäuse mit verschiedenen Schaltern für unterschiedliche Fahrzeug oder unterschiedliche Ausstattungsvarianten von Fahrzeugen zu verwenden.

Gemäß der bevorzugten Ausführungsform der Erfindung ist vorgesehen, daß einer der Schalter zum Einschalten einer Warnblinkanlage dient. Dieser Schalter befindet sich in einer zentralen, optimal erreichbaren Position, so daß die Warnblinkanlage im Bedarfsfall ohne Verzögerungen und ohne die Hände vom Lenkrad zu nehmen eingeschaltet werden kann. Zusätzlich kann vorgesehen sein, daß die Warnblinkanlage automatisch nach einer Aktivierung des Gassackmoduls elektromechanisch oder durch die Aktivierungselektronik des Gassackmoduls eingeschaltet wird.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen Dr aufsicht ein erfindungsgemäßes Lenkrad;
- Figur 2 einen schematischen Schnitt entlang der Ebene II-II von Figur 1; und
- Figur 3 in einer perspektivischen Ansicht ein Gehäuse mit Schaltern, das beim Lenkrad von Figur 1 verwendet wird.

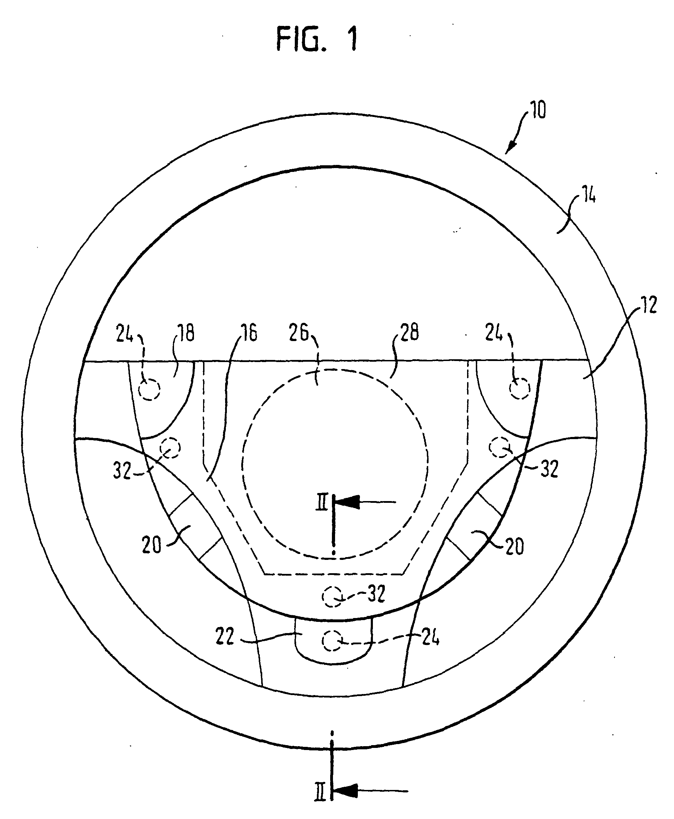

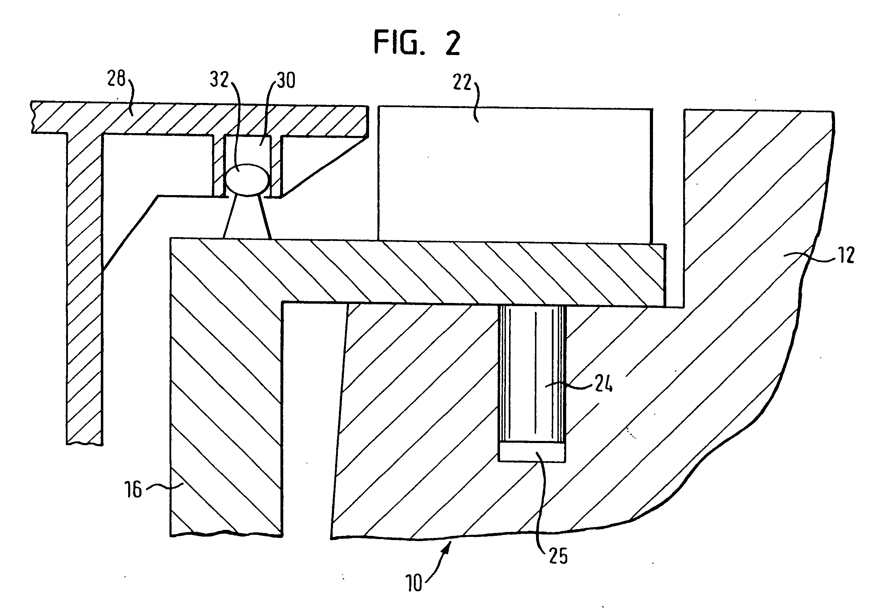

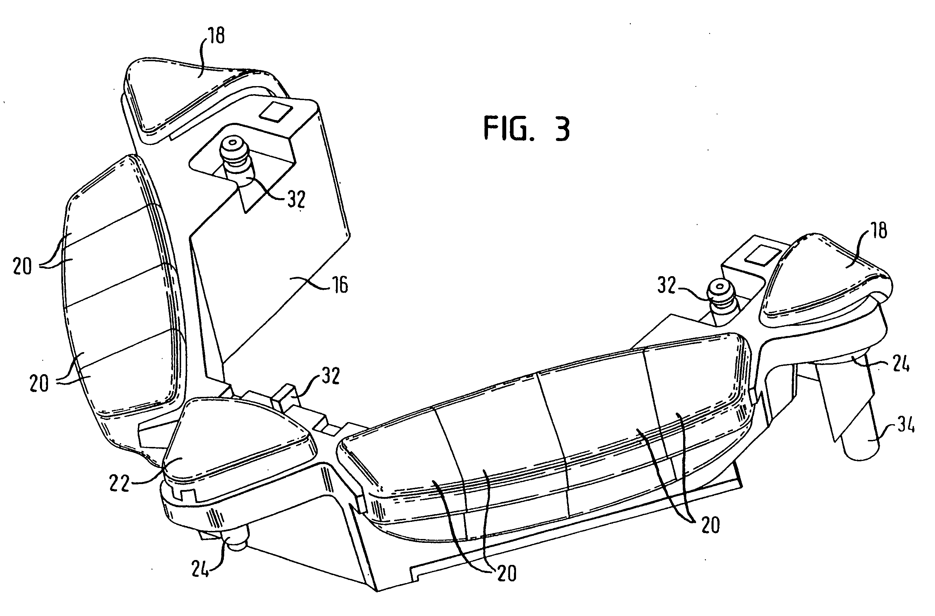

In Figur 1 ist ein Fahrzeuglenkrad 10 gezeigt, das eine Nabe 12 und einen Lenkradkranz 14 aufweist. An der Lenkradnabe 12 ist ein Gehäuse 16 (siehe auch die Figuren 2 und 3) angebracht, das mehrere Schalter 18, 20, 22 aufnimmt. Das Gehäuse 16 ist zum Zweck der Anbringung bzw. Positionierung an der Nabe 12 mit mehreren Positionierungszapfen 24 versehen, die in korrespondierende Bohrungen 25 in der Nabe eingreifen.

Das Gehäuse 16 ist allgemein U-förmig ausgeführt (siehe Figur 3), umgibt also einen Mittelraum um etwa 180°. In diesem Mittelraum ist ein schematisch angedeutetes Gassackmodul 26 angebracht. Auf der dem Fahrer des Fahrzeugs zugewandten Seite des Gassackmoduls 26 ist eine Abdeckung 28 angebracht, die sich etwa bündig an die Schalter 18, 20, 22 anschließt, so daß ein optisch ansprechender Gesamteindruck gewährleistet ist.

Zu ihrer Anbringung bzw. Positionierung ist die Abdeckung 28 mit mehreren Öffnungen 30 versehen, in die jeweils ein Lagerzapfen 32 eingreift, der am Gehäuse 16 angebracht ist. Die Lagerzapfen 32 zusammen mit den Öffnungen 30 ermöglichen es, die Abdeckung 28 in einer Richtung parallel zur Rotationsachse des Lenkrades einzudrücken, um beispielsweise eine Hupe zu betätigen.

Bei dieser Gestaltung dient das Gehäuse 16 mit den Positionierungszapfen 24, die mit der Nabe 12 zusammenwirken, und den Lagerzapfen 32, die mit der Abdeckung zusammenwirken, gleichzeitig zur Positionierung und Führung der Abdeckung 28 bezüglich der teilweise angrenzenden Nabe 12.

Da die Abdeckung 28 unmittelbar am Gehäuse 16 der Schalter angebracht ist, lassen sich trotz der Verschiebbarkeit der Abdeckung kleine Spaltmaße zwischen der Abdeckung und den Schaltern erzielen. Ähnlich geringe Spaltmaße ergeben sich zwischen den Schaltern und der Nabe des Lenkrades, da das Gehäuse der Schalter fest an der Nabe angebracht bzw. positioniert ist.

Im Gehäuse 16 können Platinen oder sonstige Anschlußelemente für die verschiedenen Schalter 18, 20, 22 angeordnet sein. Es können auch elektronische Bauteile vorgesehen sein, so daß die Funktion der Schalter frei programmiert werden kann. Zu diesem Zweck ist ein Programmieranschluß 34 vorgesehen, der bei montiertem Lenkrad von der Rückseite des Lenkrades aus zugänglich ist. Auf diese Weise ist es möglich, für ein und denselben Fahrzeugtyp individuelle, kundenspezifische Schalterbelegungen vorzusehen. Zum Anschließen aller Schalter ist ein einziger Stecker vorgesehen, der mit geringem Aufwand bei der Montage des Fahrzeuglenkrades in einen komplementären Gegenstecker eingesteckt werden kann.

Gemäß einer nicht dargestellten, alternativen Ausführungsform kann vorgesehen sein, die mehreren Schalter anstatt an der Nabe auch an dem Gassackmodul 26 anzubringen. Die sich dabei ergebenden Vorteile sind im wesentlichen dieselben wie oben bezüglich der Anbringung an der Nabe erläutert.

## Patentansprüche

1. Fährzeuglenkrad (10) mit einer Nabe (12), mehreren in ein gemeinsames Gehäuse (16) integrierten Schaltern (18, 20, 22) und einem Gassackmodul (26) mit einer Abdeckung (28), **dadurch gekennzeichnet, daß** das Gehäuse (16) an der Nabe (12) befestigt ist und am Gehäuse (16) mindestens ein Lager (32) angebracht ist, mit dem die Abdeckung (28) zusammenwirkt.

2. Fahrzeuglenkrad nach Anspruch 1, **dadurch gekennzeichnet, daß** das Lager durch einen Lagerzapfen (32) gebildet ist, der in eine Öffnung (30) der Abdeckung (28) eingreift, so daß die Abdeckung (28) unmittelbar am Gehäuse (16) angebracht ist.

3. Fahrzeuglenkrad nach Anspruch 1 oder Anspruch 2, **dadurch gekennzeichnet, daß** das Gehäuse (16) das Gassackmodul (26) mindestens teilweise umgibt.

4. Fahrzeuglenkrad nach einem der vorhergehenden Ansprüche, **dadurch gekennzeichnet, daß** ein gemeinsamer Stecker zum Anschließen der Schalter (18, 20, 22) vorgesehen ist.

5. Fahrzeuglenkrad nach einem der vorhergehenden Ansprüche, **dadurch gekennzeichnet, daß** die Funktion mindestens eines der Schalter (18, 20, 22) frei programmierbar ist.

6. Fahrzeuglenkrad nach einem der vorhergehenden Ansprüche, **dadurch gekennzeichnet, daß** einer der Schalter (22) zum Einschalten einer Warnblinkanlage dient.

7. Fahrzeuglenkrad nach einem der vorhergehenden Ansprüche, **dadurch gekennzeichnet, daß** das Gehäuse (16) mit mehreren Positionierungszapfen (24) versehen ist, die in korrespondierende Bohrungen (25) in der Nabe (12) eingreifen.

## Claims

1. A vehicle steering wheel (10) comprising a hub (12), a plurality of switches (18, 20, 22) integrated in a common housing (16), and a gas bag module (26) having a cover (28), **characterized in that** the housing (16) is secured to the hub (12) and that at least one bearing (32) is fitted to the housing (16), the cover (28) cooperating with the bearing (32).

2. The vehicle steering wheel as set forth in claim 1, **characterized in that** the bearing is formed by a bearing pin (32) engaging in an opening (30) of the cover (28) so that the cover (28) is directly fitted to the housing (16).

3. The vehicle steering wheel as set forth in claim 1 or claim 2, **characterized in that** the housing (16) surrounds the gas bag module (26) at least in part.

4. The vehicle steering wheel as set forth in any of the preceding claims, **characterized in that** a common plug for connecting the switches (18, 20, 22) is provided.

5. The vehicle steering wheel as set forth in any of the preceding claims, **characterized in that** the function of at least one of the switches (18, 20, 22) is freely programmable.

6. The vehicle steering wheel as set forth in any of the preceding claims, **characterized in that** one of the switches (22) serves to switch on a hazard warning flasher.

7. The vehicle steering wheel as set forth in any of the preceding claims, **characterized in that** the housing (16) is provided with a plurality of positioning pins (24) which engage in corresponding holes (25) in the hub (12).

## Revendications

1. Volant de direction de véhicule (10) comportant un moyeu (12), plusieurs commutateurs (18, 20, 22) intégrés dans un boîtier (16) commun et un module de coussin à gaz (26) avec un couvercle (28), **caractérisé en ce que** le boîtier (16) est fixé sur le moyeu (12), et sur le boîtier (16) est monté au moins un palier (32) avec lequel le couvercle (28) coopère.

2. Volant de direction de véhicule selon la revendication 1, **caractérisé en ce que** le palier est formé par un tourillon (32) qui s'engage dans une ouverture (30) du couvercle (28), de telle sorte que le couvercle (28) est monté directement sur le boîtier (16).

3. Volant de direction de véhicule selon la revendication 1 ou la revendication 2, **caractérisé en ce que** le boîtier (16) entoure le module de coussin à gaz (26) au moins partiellement.

4. Volant de direction de véhicule selon l'une des revendications précédentes, **caractérisé en ce qu'**il est prévu une fiche commune pour le branchement du commutateur (18, 20, 22).

5. Volant de direction de véhicule selon l'une des revendications précédentes, **caractérisé en ce que** la fonction d'au moins un des commutateurs (18, 20, 22) est librement programmable.

6. Volant de direction de véhicule selon l'une des revendications précédentes, **caractérisé en ce qu'**un des commutateurs (22) sert à allumer des feux de détresse.

7. Volant de direction de véhicule selon l'une des revendications précédentes, **caractérisé en ce que** le boîtier (16) est pourvu de plusieurs tourillons de positionnement (24) qui s'engagent dans des alésages (25) correspondants dans le moyeu (12).
